# EUROPÄISCHE PATENTSCHRIFT

(11) **EP 2 446 510 B1**
(45) Veröffentlichungstag und Bekanntmachung des Hinweises auf die Patenterteilung: **24.10.2012**
(21) Anmeldenummer: 10718996.1
(22) Anmeldetag: 12.05.2010
(51) Int. Cl.: H01R 13/66, B60L 11/18

(54) **LADEKABELSTECKER FÜR ELEKTROFAHRZEUGE**
CHARGING CABLE PLUG FOR ELECTRIC VEHICLES
FICHE DE CÂBLE DE CHARGE POUR VÉHICULES ÉLECTRIQUES

(30) Priorität: 22.06.2009 DE 102009030092
(43) Veröffentlichungstag der Anmeldung: 02.05.2012
(73) Patentinhaber: RWE AG, 45128 Essen (DE)
(72) Erfinder: GAUL, Armin, 59379 Selm (DE); DIEFENBACH, Ingo, 59425 Unna (DE)
(74) Vertreter: Cohausz & Florack
(86) Internationale Anmeldenummer: PCT/EP2010/056518
(87) Internationale Veröffentlichungsnummer: WO 2010/149426

(56) Entgegenhaltungen:
- DE-A1-102007 002 025
- DE-A1-102007 017 407
- DE-U1- 29 702 766
- US-A- 5 758 414
- US-A1- 2007 126 395

## Beschreibung

Der Gegenstand betrifft einen Ladekabelstecker für Elektrofahrzeuge mit einem Gehäuse und in dem Gehäuse angeordneten, zum Anschluss an eine Ladestation gebildeten elektrischen Kontakten. Darüber hinaus betrifft der Gegenstand ein Ladekabel mit einem solchen Stecker als auch ein System mit einem solchen Stecker.

Die Verbreitung von Elektrofahrzeugen wird in naher Zukunft erheblich zunehmen. Mit der Verbreitung von Elektrofahrzeugen ergeben sich jedoch neue Anforderungen an die Versorgungsinfrastruktur. Elektrofahrzeuge müssen nicht nur im häuslichen Umfeld, sondern auch außerhalb des häuslichen Umfeldes mit elektrischer Energie versorgt werden können. Hierzu sollten an öffentlichen Orten Ladestationen zur Verfügung gestellt werden, an denen Nutzer von Elektrofahrzeugen elektrische Energie beziehen können. Die Ladestationen können beispielsweise an öffentlichen Parkplätzen, in Parkhäusern oder auch an privaten Parkplätzen, beispielsweise im Bereich des Arbeitsplatzes des Nutzers, angeordnet sein. Benutzer von Elektrofahrzeugen könnten dann ihre Fahrzeuge an solche Ladestationen anschließen. Während ihrer Abwesenheit kann die Batterie der Elektrofahrzeuge aufgeladen werden.

Die von den Benutzern von Elektrofahrzeugen bezogene elektrische Energie muss jedoch bezahlt werden. Daher muss erfasst werden, welcher Nutzer welche Menge elektrischer Energie bezieht, um diese dem Benutzer in Rechnu können. Insbesondere bei öffentlich zugänglichen Ladestationen muss sichergestellt werden, dass ein Benutzer nur die elektrische Energie bezahlt, die er tatsächlich bezieht. Außerdem muss sichergestellt werden, dass elektrische Energie nur solchen Nutzern zur Verfügung gestellt wird, welche einen gültigen Versorgungsvertrag mit einem Energieversorger haben. Daher muss vor einem Ladevorgang eine Identifikation des Benutzers gegenüber der Ladestation und somit gegenüber dem Energieversorger erfolgen. Nur durch eine erfolgreiche Identifikation kann eine Energiezufuhr freigegeben werden.

Problematisch bei der Verwendung von stationären, in öffentlichen Bereichen zugänglichen Ladestation ist jedoch, dass die Struktur der Elektrofahrzeuge heterogen sein wird, was bedeutet, dass unterschiedlichste Elektrofahrzeuge mit unterschiedlichsten Steckern und Steckersystemen betrieben werden. Auch ist noch kein Standard entwickelt worden, mit dessen Hilfe sich Elektrofahrzeuge gegenüber einer Ladestation identifizieren können. Darüber hinaus kann beispielsweise bei nachgerüsteten Elektrofahrzeugen eine Integration einer Identifikations-Hardware in das Fahrzeug selber schwierig sein.

Dokument DE-A-10 2007002025 offenbart einen Ladehabelstecher gemäβ dem Oberbgriff der Anspruchs 1.

Aus dem zuvor genannten Grund lag dem Gegenstand die Aufgabe zugrunde, eine einfache, vielseitig verwendbare Identifikation von Benutzern gegenüber Ladestationen zu ermöglichen.

Gegenständlich wird diese Aufgabe durch einen Ladekabelstecker für Elektrofahrzeuge mit einem Gehäuse und in dem Gehäuse angeordneten, zum Anschluss an eine Ladestation gebildeten elektrischen Kontakten gelöst, derart, dass ein Identifikationsmittel in dem Gehäuse angeordnet ist, welches mit der Ladestation über die elektrischen Kontakte kommuniziert.

Es ist erkannt worden, dass die Identifikation des Benutzers nicht zwangsläufig über das Fahrzeug erfolgen muss. Auch ist erkannt worden, dass Benutzerschnittstellen an der Ladestation, über welche eine Identifikation erfolgen könnte, umständlich zu bedienen sind und von den Benutzern abgelehnt werden. Die Benutzer möchten ohne eine manuelle Bedienung vornehmen zu müssen, ihr Fahrzeug mit elektrischer Energie aufladen können. Die Benutzer möchten sich nicht um eine Identifikation kümmern. Hierfür müsste aber bei Lösungen gemäß des Standes der Technik entweder eine Kundenkarte mitgeführt werden oder eine Identifikationsnummer eingegeben werden. Diese Lösungen halten die Nutzer jedoch davon ab, zwanglos die Ladestationen zu nutzen.

Gegenständlich ist eine zwanglose Nutzung der Ladestationen möglich, dadurch, dass der Ladekabelstecker selbst das Identifikationsmittel aufweist, mit denen sich der Benutzer bzw. das Ladekabel gegenüber einer Ladestation identifizieren kann. Durch die Integration des Identifikationsmittels in dem Stecker des Ladekabels, welcher in die Ladesäule eingesteckt wird, erfolgt die Identifikation völlig losgelöst von dem Benutzer bzw. von dem Fahrzeug oder von vom Benutzer mitgeführten Identifikationsmitteln. Unterschiedlichste Fahrzeuge unterschiedlichster Hersteller können so an ein und derselben Ladestation geladen werden, ohne dass eine Einigung über einen Identifikationsstandard erfolgen müsste. Es ist lediglich notwendig, dass der Benutzer den Ladekabelstecker mit dem Identifikationsmittel nutzt, mit Hilfe derer er sich gegenüber der Ladestation identifizieren kann.

Es sei angemerkt, dass mit der Verwendung des Begriffes Ladekabelstecker ein Bereich des Ladekabels und des Gehäuses in der Nähe der Steckdose gemeint ist. Somit fällt auch ein zweites in direkter Nähe des Ladekabelsteckers angeordnetes, über das Kabel mit dem eigentlichen Stecker verbundenes Gehäuse unter den Begriff des Ladekabelsteckers. Insbesondere fallen alle Lösungen unter den Begriff des Ladekabelsteckers, welche die Identifikationsmittel in direkter Nähe der Aufnahme der Ladestation für den Stecker anordnen.

Ferner sei angemerkt, dass die elektrischen Kontakte neben Energiekontakten auch Kommunikationskontakte sein können. Beispielsweise können die elektrischen Kontakte Teil eines Pilotleiters sein. Auch können die elektrischen Kontakte Teil eines Leistungs- oder Energieleiters sein.

Das Ladekabel kann fahrzeugseitig in das Fahrzeug eingesteckt werden. Dass Fahrzeuge selbst muss keine Identifikation gegenüber der Ladestation vornehmen. Somit können neben Elektroautos auch elektrisch betriebene Roller oder auch andere elektrisch betriebene Fahrzeuge durch Verwendung des gegenständlichen Ladekabelsteckers elektrische Energie von der Ladestation beziehen. Eine "intelligente" Ladungssteuerung innerhalb des Fahrzeugs, mit welcher eine Identifikation des Fahrzeugs bzw. des Nutzers erfolgt, kann entfallen. Die gesamte "Intelligenz", die für die Identifikation gegenüber der Ladestation und somit dem Netzbetreiber und/oder Energieversorger notwendig ist, steckt gegenständlich in dem Ladekabelstecker selbst.

Gemäß eines vorteilhaften Ausführungsbeispiels wird vorgeschlagen, dass das Identifikationsmittel zur Übertragung eines Identifikationssignals über die Kontakte an die Ladestation gebildet ist. Das Identifikationsmittel kann eine elektrische Schaltung sein, mit deren Hilfe in die elektrische Verbindung zwischen Stecker und Ladestation Signale eingekoppelt werden können. Die Signale können dabei analog oder digital aufmoduliert werden. Das Identifikationssignal kann ein Signal sein, welches die Identifikation des Ladekabelsteckers beinhaltet. Diese Identifikation kann beispielsweise ein eindeutiger Kennzeichner sein.

Auch ist es möglich, dass das Identifikationssignal mittels eines geeigneten Verschlüsselungsverfahrens übertragen wird, so dass die Identifikation des Ladekabelsteckers nur für die Ladestation selbst erkennbar ist. Ein Auslesen des Identifikationssignals von anderen Stellen außerhalb der Ladestation kann durch ein Verschlüsseln des Identifikationssignals vermieden werden. Beispielsweise kann mittels eines öffentlichen Schlüssels der Ladestation (vorteilhafterweise existiert ein einziger Schlüssel für alle Ladestationen im Netz, da ansonsten alle öffentlichen Schlüssel aller Ladestationen im Identifikationsmittel bekannt sein müssten), welcher fest in dem Ladekabelstecker hinterlegt sein kann, eine Verschlüsselung des Identifikationssignals erfolgen. Dieses Signal kann dann in den Ladestationen mit Hilfe dort gespeicherter, privater Schlüssel entschlüsselt werden.

Das Identifikationssignal bzw. die Identifikationsdaten können den Benutzer, einen Energieliefervertrag, Vertragsparameter und/oder dergleichen kennzeichnen. Es ist möglich, dass das Identifikationssignal bzw. die Identifikationsdaten in den Ladekabelstecker mittels einer Programmierung des Ladekabelsteckers einprägbar ist. Hierbei kann das Identifikationssignal bzw. die Identifikationsdaten in einem in dem Ladekabelstecker angeordneten Speicher abgelegt werden. Der Speicher kann ein nicht flüchtiger Speicher sein. Der Speicher kann die Identifikationsdaten verschlüsselt ablegen.

Auch ist es möglich, dass die Identifikationsdaten nur verschlüsselt in dem Ladekabelstecker vorhanden sind und bereits verschlüsselt in den Ladekabelstecker geladen werden. Bei der Übertragung von dem Ladekabelstecker zur Ladestation überträgt das Identifikationssignal die verschlüsselten Daten und es muss keine Verschlüsselung dieser Daten in dem Ladekabelstecker selbst erfolgen. Das Entschlüsseln der Identifikationsdaten, welche mit dem Identifikationssignal in die Ladestation geladen werden, kann in der Ladestation erfolgen. Somit müsste der öffentliche Schlüssel der Ladestation(en) nur beim Programmieren des Ladekabelsteckers bekannt sein. In dem Ladekabelstecker selber ist dann keine Logik mehr notwendig, um eine Verschlüsselung vorzunehmen. Dies reduziert die Kosten eines Ladekabelsteckers. Dies ist insbesondere dann von Vorteil, wenn die Identifikationsdaten quasi statisch sind. Diese Daten ändern sich kaum, so dass eine vorab Verschlüsselung möglich ist.

Gemäß eines vorteilhaften Ausführungsbeispiels wird auch vorgeschlagen, dass das Gehäuse eine Aufnahme für ein Verriegelungsmittel der Ladesäule aufweist, derart, dass nach Aufnahme des Verriegelungsmittels der Stecker an der Ladesäule formschlüssig befestigt ist. Beispielsweise ist es möglich, dass nach einem Verrasten des Verriegelungsmittels in dem Ladekabelstecker der Ladekabelstecker unlösbar in der Ladestation befestigt ist. Das Verriegelungsmittel der Ladestation kann bei dem Empfang des Identifikationssignals bewegt werden, derart, dass es in die Aufnahme des Ladekabelsteckers bewegt wird. Hierdurch wird ein Herausziehen des Ladekabelsteckers aus der Ladestation verhindert. Dies kann verhindern, dass nach einer Aktivierung der Energiezufuhr das Ladekabel von der Ladestation unbemerkt abgezogen wird und die zur Verfügung gestellte Energie durch einen Nichtberechtigten bezogen wird.

Es können Mittel vorhanden sein, die eine gewaltsame Trennung des Ladekabels von der Ladestation detektieren. Solche Detektionsmittel können in der Ladestation als auch in dem Ladekabelstecker vorhanden sein. Detektieren diese Mittel eine gewaltsame Trennung, kann die Energiezufuhr gestoppt werden. Auch hierdurch wird ein unberechtigter Bezug der zur Verfügung gestellten Energie verhindert.

Um es dem berechtigten Benutzer jedoch zu ermöglichen, das Ladekabel von der Ladestation abzuziehen, wenn er den Ladevorgang beenden möchte, muss dies durch den Stecker der Ladestation signalisiert werden. Das Fahrzeug selber kann eine solche Signalisierung nicht vornehmen, da der Ladekabelstecker mit der Ladestation kommuniziert und nicht das Fahrzeug, zumindest gegenständlich nicht hinsichtlich der Freigabe der elektrischen Energie. Aus diesem Grunde weist das Gehäuse ein zum Lesen einer Benutzeridentifikation eingerichtetes Lesemittel auf, wobei das Lesemittel in Wirkverbindung mit dem Identifikationsmittel steht. Mit Hilfe des Lesemittels kann eine Benutzeridentifikation von einem Datenträger, beispielsweise einem Schlüssel, ausgelesen werden. Diese Benutzeridentifikation identifiziert den Benutzer gegenüber dem Ladekabelstecker. Ist eine erfolgreiche Identifikation erfolgt, kann dies dem Identifikationsmittel mitgeteilt werden.

Gemäß eines vorteilhaften Ausführungsbeispiels wird vorgeschlagen, dass das Lesemittel zum berührungslosen Lesen eines eine Benutzeridentifikation aussendenden Schlüssels gebildet ist. Der Schlüssel kann beispielsweise ein Transponder sein. Der Transponder kann beispielsweise mittels eines hochfrequenten Lesefeldes, welches durch die Lesemittel ausgesendet wird, aktiviert und abgefragt werden. Durch das Lesefeld wird der Transponder aktiviert und sendet daraufhin seine Kennung aus. Diese Kennung kann ebenfalls im Hochfrequenzbereich ausgesendet werden. Die Energie zum Aussenden der Kennung wird seitens des Transponders durch eine Batterie und/oder durch das Lesefeld zur Verfügung gestellt. Der Schlüssel kann beispielsweise ein Transponder in einem Fahrzeugschüssel oder ein Transponder an einem Schlüsselanhänger sein.

Um einen Transponder auszulesen, wird gemäß eines vorteilhaften Ausführungsbeispiels vorgeschlagen, dass das Lesemittel eine Transponderleseeinrichtung ist. Die Transponderleseeinrichtung kann das Lesefeld in einem Hochfrequenzbereich aussenden. Das Lesefeld kann sich beispielsweise um den Ladekabelstecker herum ausbreiten. Tritt ein Transponder in das Lesefeld ein, so kann der Transponder dem Lesefeld Energie entziehen, mit welcher Energie der Transponder seine eigene Kennung mit Hilfe eines Sendefeldes aussenden kann. Diese Kennung kann mittels der Transponderleseeinrichtung empfangen und ausgewertet werden.

Gemäß eines vorteilhaften Ausführungsbeispiels wird vorgeschlagen, dass das Lesemittel zum Aussenden eines Signals an das Identifikationsmittel bei einem Empfang der Benutzeridentifikation gebildet ist. Hierbei kann beispielsweise das Lesemittel die Benutzeridentifikation an das Identifikationsmittel übermitteln. In dem Identifikationsmittel kann eine Überprüfung der Benutzeridentifikation erfolgen und bei einer positiven Prüfung kann eine Freigabe des Ladekabelsteckers von der Ladestation erfolgen.

Gemäß eines vorteilhaften Ausführungsbeispiels wird vorgeschlagen, dass das Identifikationsmittel bei einer positiven Prüfung der Benutzeridentifikation ein zumindest das Verriegelungsmittel deaktivierendes Freigabesignal an die Ladestation übermittelt. Wird im Ladekabelstecker festgestellt, dass der berechtigte Benutzer sich dem Ladekabelstecker genähert hat, bzw. sich sein Schlüssel in dem Lesefeld befindet, kann das Identifikationsmittel von dem Ladekabelstecker an die Ladestation ein Freigabesignal übermitteln. Mit Hilfe dieses Freigabesignals kann der Ladestation signalisiert werden, dass das Verriegelungsmittel deaktiviert wird. Ein Deaktivieren des Verriegelungsmittels kann beispielsweise ein Entfernen der Verriegelung aus der Aufnahme in dem Stecker sein. Beispielsweise kann ein Bolzen des Verriegelungsmittels aus der Aufnahme in dem Stecker herausbewegt werden.

Gemäß eines vorteilhaften Ausführungsbeispiels wird vorgeschlagen, dass das Freigabesignal die Energiezufuhr durch die Ladestation unterbricht. Hierbei kann beispielsweise in der Ladestation ein Unterbrechungsmittel vorgesehen sein, welches bei dem Empfang des Freigabesignals die Energiezufuhr zu dem Ladekabelstecker unterbricht. Somit wird sichergestellt, dass nach einem berechtigten Entfernen des Ladekabelsteckers von der Ladestation keine weitere Energie aus der Ladestation bezogen werden kann. Erst wenn ein berechtigter Ladekabelstecker erneut in die Ladestation eingesteckt wird, kann mittels der entsprechenden Einrichtung in der Ladestation die Energiezufuhr erneut aktiviert werden.

Gemäß eines vorteilhaften Ausführungsbeispiels wird auch vorgeschlagen, dass in dem Gehäuse ein einen elektrischen Anschluss der Kontakte an eine Ladestation erkennendes Anschlusserkennungsmittel angeordnet ist, wobei das Anschlusserkennungsmittel das Identifikationsmittel bei einem erkannten Anschluss an die Ladestation aktiviert. Das Identifikationsmittel soll lediglich bei dem Anschluss des Ladekabelsteckers an die Ladestation die Identifikation über die Kontakte aussenden. Dazu ist es notwendig, dass das Identifikationsmittel nur dann das Identifikationssignal aussendet, wenn der Stecker in der Ladestation eingesteckt ist. Mit Hilfe des Anschlusserkennungsmittels wird festgestellt, dass der Stecker in der Ladestation eingesteckt ist. Hieraufhin kann das Identifikationsmittel das Identifikationssignal aussenden. Hierdurch wird erreicht, dass nachdem der Stecker in die Ladestation eingesteckt wurde, das Identifikationssignal durch das Identifikationsmittel über die elektrischen Kontakte an die Ladestation übermittelt wird.

Ein weiterer Gegenstand ist ein Ladekabel mit einem zuvor beschriebenen Ladekabelstecker. Das Ladekabel kann fahrzeugseitig mit einer Buchse versehen sein, welche mit dem Fahrzeug verbunden wird. Ladestationsseitig wird der gegenständliche Ladekabelstecker verwendet, um das Ladekabel gegenüber der Ladestation zu identifizieren. Jeder Benutzer kann somit sein eigenes Ladekabel mit sich führen und sich mit Hilfe des Ladekabels bzw. des Ladekabelsteckers gegenüber der Ladestation identifizieren.

Gemäß eines weiteren Gegenstandes wird ein System mit einem solchen Ladekabel und eine Ladestation vorgeschlagen.

Das System kann vorteilhafter Weise durch einen eine Benutzeridentifikation aussendenden Schlüssel zur Kommunikation mit dem Lesemittel in dem Ladekabelstecker ausgestattet sein. Der Schlüssel kann dabei beispielsweise der zuvor erwähnte Transponder sein.

Die Ladestation kann gemäß eines vorteilhaften Ausführungsbeispiels ein Verriegelungsmittel zum Verriegeln des Steckers in der Ladestation nach dem Empfang eines Identifikationssignals von dem Stecker aufweisen. Das Verriegelungsmittel kann beispielsweise ein oder mehrere Bolzen sein, die bei dem Empfang des Identifikationssignals in eine Aufnahme in dem Stecker verschoben werden, so dass der Stecker nicht mehr aus der Ladestation entfernt werden kann. Erst nach dem Empfang des Freigabesignals kann das Verriegelungsmittel deaktiviert und der Stecker freigegeben werden.

Gemäß eines vorteilhaften Ausführungsbeispiels wird auch vorgeschlagen, dass die Ladestation ein Energiefreigabemittel zur Freigabe einer Energiezufuhr an den Stecker bei einem Empfang eines Identifikationssignals von dem Stecker und/oder zum Unterbrechen der Energiezufuhr bei einem Empfang des Freigabesignals von dem Stecker aufweist.

Nachfolgend wird der Gegenstand anhand einer Ausführungsbeispiele zeigenden Zeichnung näher erläutert. In der Zeichnung zeigen:
- Fig. 1: einen Ladekabelstecker gemäß eines vorteilhaften Ausführungsbeispiels;
- Fig. 2: eine schematische Detailansicht einer Ladestation;
- Fig. 3: eine schematische Detailansicht einer Ladestation mit einem Stecker;
- Fig. 4: ein Ladekabel gemäß eines vorteilhaften Ausführungsbeispiels.

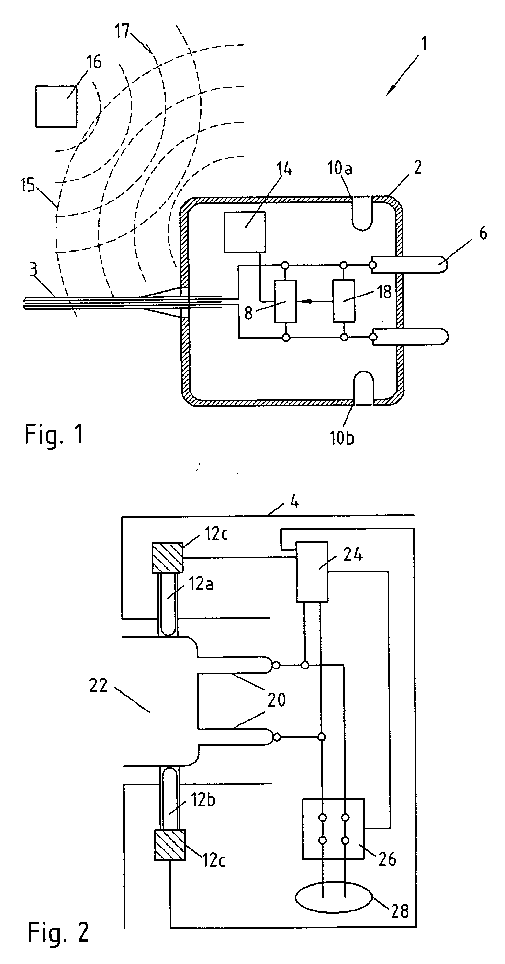

Fig. 1 zeigt einen Ladekabelstecker 1 mit einem Gehäuse 2. In das Gehäuse 2 führt ein Ladekabel 3, welches auf der nicht dargestellten Seite mit einer Buchse verbunden ist, welche an ein Fahrzeug angeschlossen werden kann. Das Gehäuse 2 weist elektrische Kontakte 6 auf. Die elektrischen Kontakte 6 sind mit den Leitern des Ladekabels 3 elektrisch verbunden. In dem Gehäuse 2 ist eine elektrische Schaltung als Identifikationsmittel 8 angeordnet. Dies kann ein Mikroprozessor sein, auf dem die entsprechende Logik eingespeichert ist. Ferner ist in dem Gehäuse 2 ein Lesemittel 14 angeordnet. Das Lesemittel 14 steht in Wirkverbindung mit dem Identifikationsmittel 8. Das Lesemittel 14 ist eine Transponderlesevorrichtung, welche ein Lesefeld, beispielsweise ein hochfrequentes 22kHz Signal 15 aussendet und ein Sendefeld 17 eines Transponders 16, beispielsweise ebenfalls im kHz-Bereich, empfangen kann. Ferner ist in dem Gehäuse 2 ein Anschlusserkennungsmittel 18 vorgesehen, welches ebenfalls ein Mikroprozessor sein kann, auf dem die entsprechende Logik abgelegt ist. Das Anschlusserkennungsmittel 18 ist mit dem Identifikationsmittel 8 in Wirkverbindung. Schließlich ist in dem Gehäuse 2 eine Aufnahme 10, beispielsweise durch zwei Nuten 10a, 10b gebildet, vorgesehen. Die Aufnahmen 10 sind zur Aufnahme eines Verriegelungsmittels 12 der Ladestation, welches nachfolgend beschrieben wird, vorgesehen.

Das Identifikationsmittel 8 ist elektrisch mit den Leitern des Kabels 3 verbunden. Über diese elektrische Verbindung kann das Identifikationsmittel 8 ein Identifikationssignal auf die Leiter des Ladekabels 3 und somit auf die elektrischen Kontakte 6 aufmodulieren. Hierdurch ist es möglich, dass eine Identifikation des Ladekabelsteckers 1 über die elektrischen Kontakte 6 an die Ladestation 4 übermittelt werden kann. Das Identifikationssignal kann dabei Identifikationsdaten des Benutzers bzw. des Ladekabels enthalten. Diese Identifikationsdaten werden mittels des Identifikationsmittels 8 auf die Leitung moduliert.

Das Anschlusserkennungsmittel 18 ist derart mit den Kontakten 6 verbunden, dass sie es Verbindung der Kontakte 6 mit Kontakten 20 in der Ladestation 4 detektiert. Wird die Kontaktierung der Kontakte 6 mit den Kontakten 20 durch das Anschlusserkennungsmittel 18 detektiert, so aktiviert das Anschlusserkennungsmittel 18 das Identifikationsmittel 8 über ein entsprechendes Signal. Hieraufhin sendet das Identifikationsmittel 8 über die Kontakte 6 die Identifikationsdaten an die Ladestation 4.

Fig. 2 zeigt schematisch eine Detailansicht einer Buchse 22 einer Ladestation 4. Zu erkennen ist, dass in der Buchse 22 Kontakte 20 vorgesehen sind, welche zur Aufnahme der Kontakte 6 geformt sind. Ferner ist zu erkennen, dass in der Ladestation 4 ein Verriegelungsmittel 12 vorgesehen ist. Das Verriegelungsmittel 12 kann aus zwei Bolzen 12a, 12b und einem Antrieb 12c gebildet sein. Mittels des Antriebs 12c können die Bolzen 12b aus der gezeigten Position in eine ausgefahrene Position verschoben werden, wie dies nachfolgend noch gezeigt werden wird.

Ferner weist die Ladestation 4 eine Steuereinheit 24 auf. Die Steuereinheit 24 ist mit den Kontakten 20 elektrisch verbunden. Die Steuereinheit 24 empfängt über die Kontakte 20 beispielsweise die Identifikationsdaten mittels des Identifikationssignals von dem Identifikationsmittel 8. Außerdem empfängt die Steuereinheit 24 ein Freigabesignal von dem Identifikationsmittel 8. Mittels der Steuereinheit 24 ist eine Kommunikation zwischen dem Stecker 1 und der Ladestation 4 möglich.

Schließlich weist die Ladestation 4 ein Energiefreigabemittel 26 auf, welches mit der Steuereinheit 24 verbunden ist. Das Energiefreigabemittel 24 kann durch die Steuereinheit 24 in eine geschlossene Position, wie dargestellt, bewegt werden. In der geschlossenen Position ist eine Energiezufuhr über die Kontakte 20 an die Kontakte 6 möglich. Die Steuereinheit 24 kann darüber hinaus das Energiefreigabemittel 26 derart ansteuern, dass eine elektrische Verbindung zwischen der Zuleitung 28 und den Kontakten 20 unterbrochen wird.

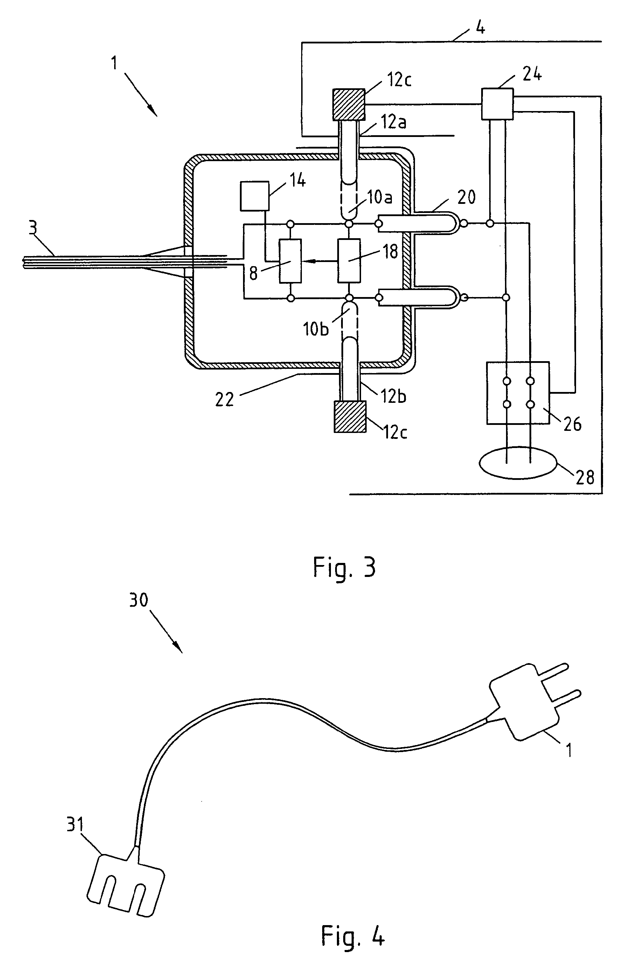

Fig. 3 zeigt den Stecker 1 in einem eingeschobenen Zustand in der Ladestation 4. Wird der Stecker 1 in die Buchse 22 der Ladestation 4 eingesteckt, so gelangen die Kontakte 6 in elektrischen Kontakt mit den Kontakten 20. Diese Kontaktierung wird über das Anschlusserkennungsmittel 18 sensiert. Dies kann beispielsweise dadurch erfolgen, dass die Steuereinheit 24 regelmäßig elektrische Impulse über die Kontakte 20 aussendet. Werden diese elektrischen Impulse von den Kontakten 20 über die Kontakte 6 auf die Leiter des Kabels 3 geleitet, so können diese durch das Anschlusserkennungsmittel 18 detektiert werden. Wird ein Anschluss detektiert, aktiviert das Anschlusserkennungsmittel 18 das Identifikationsmittel 8.

Das Identifikationsmittel 8 moduliert daraufhin Identifikationsdaten als Identifikationssignal auf die Leiter des Kabels 3. Dieses Identifikationssignal wird über die Kontakte 6 und die Kontakte 20 auf die elektrischen Leiter innerhalb der Ladestation 4 übertragen. Die Steuereinheit 24 kann das Identifikationssignal empfangen und auswerten. Hierbei ist es beispielsweise möglich, dass das Identifikationssignal ein verschlüsseltes Signal ist, welches die Identifikationsdaten verschlüsselt enthält. Die Verschlüsselung kann beispielsweise mittels eines asymmetrischen Verschlüsselungsverfahrens erfolgt sein. Hierbei kann mit einem öffentlichen Schlüssel der Ladestation 4, der beispielsweise für alle im Netz befindlichen Stationen 4 gleich sein kann, erfolgt sein. Mit einem privaten Schlüssel der Ladestation 4, der in der Steuereinheit 24 abgelegt sein kann, kann das Identifikationssignal und somit die Identifikationsdaten entschlüsselt werden.

Eine Identifikation eines Benutzers wird in der Steuereinheit durchgeführt. Hierbei ist es beispielsweise möglich, dass die Steuereinheit über die Zuleitung 28 bzw. über eine Netzwerkverbindung (nicht dargestellt) mit einem zentralen Computer kommuniziert und die Berechtigung des Benutzers anhand der Identifikationsdaten überprüft. Ist die Überprüfung in der Steuereinheit 24 positiv, so übermittelt die Steuereinheit 24 an die Verriegelungsmittel 12 ein Verriegelungssignal. Hieraufhin wird der Antrieb 12c des Verriegelungsmittels 12 aktiviert und die Bolzen 12a und 12b werden aus einer ersten Position in eine in Fig. 3 gezeigten zweiten Position bewegt. In der zweiten Position verrasten die Bolzen 12a, 12b in den Aufnahmen 10a, 10b des Steckers 1. Daraufhin übermittelt das Verriegelungsmittel 12 ein positives Verriegelungssignal an die Steuereinheit 24, woraufhin die Steuereinheit 24 erkennt, dass der Stecker 1 in der Buchse 22 verriegelt ist.

Anschließend kann die Steuereinheit 24 das Energiefreigabemittel 26 aktivieren, derart, dass die Zuleitung 28 mit den Kontakten 20 in elektrischen Kontakt gebracht werden. Hierdurch ist eine Energiezufuhr über den Stecker 1 an das Ladekabel 3 möglich. Ein an das Ladekabel 3 angeschlossenes Elektrofahrzeug kann Energie von der Ladesäule 4 beziehen.

Möchte ein Benutzer nun den Stecker 4 aus der Buchse 22 entfernen, um den Ladevorgang zu beenden, so muss sich der Benutzer gegenüber dem Stecker 1 authentifizieren. Hierzu kann mittels der Lesemittel 14 ein Lesefeld 15 permanent ausgesandt werden. Das Lesefeld 15 ermöglicht es einem Transponder 16, Energie zu beziehen. Wird der Transponder 16 durch ein Lesefeld 15 aktiviert, sendet der Transponder 16 ein Sendefeld 17 enthaltend eine Identifikation des Transponders 16 aus. Dieses Sendefeld 17 kann von dem Lesemittel 14 empfangen werden. Eine Auswertung des Sendefeldes 17 und der darin enthaltenen Identifikationsdaten ermöglicht es dem Lesemittel zu überprüfen, ob der Transponder 16 ein berechtigter Transponder 16 1st.

Ist eine Überprüfung positiv, so gibt das Lesemittel 14 ein Signal an die Identifikationsmittel 8. Hieraufhin kann das Identifikationsmittel 8 ein Freigabesignal über die Kontakte 6 und die Kontakte 20 an die Steuereinheit 24 übermitteln. Beim Empfang des Freigabesignals bewirkt die Steuereinheit 24 zunächst ein Öffnen der Kontakte des Energiefreigabemittels 26, derart, dass eine Energiezufuhr unterbrochen wird. Anschließend bewirkt die Steuereinheit 24, dass das Verriegelungsmittel 12 aktiviert wird, derart, dass der Antrieb 12c des Verriegelungsmittels 12 die Bolzen 12a, 12b in die in Fig. 2 gezeigte Position zurück bewegen. Hieraufhin kann der Stecker 1 aus der Buchse 22 der Ladestation 4 entfernt werden.

Nähert sich ein nicht berechtigter Transponder 16 dem Stecker 1, so übermittelt auch dieser Transponder ein Sendefeld 17 mit einer Identifikation. Diese Identifikation kann in dem Lesemittel 14 ebenfalls ausgewertet werden. Jedoch führt ein nicht berechtigter Transponder nicht dazu, dass das Lesemittel 14 das Identifikationsmittel 8 zum Aussenden des Freigabesignals aktiviert.

Fig. 4 zeigt ein Ladekabel 30 mit einem Stecker 1 und einer Buchse 31. Der Stecker 1, wie in Fig. 3 gezeigt, kann in eine Ladestation 4 eingesteckt werden. Die Buchse 31 kann mit einem Fahrzeug verbunden werden. Über das Ladekabel 30 kann das Fahrzeug mit einer Ladestation 4 elektrisch verbunden werden und hierüber elektrische Energie beziehen.

Mittels des gegenständlichen Steckers 1 ist es möglich, eine Identifikation unabhängig von einer Logik innerhalb eines Fahrzeugs zu gewährleisten. Ein Strombezug ist somit in besonders einfacher Weise möglich. Eine Benutzerinteraktion mit einer Ladestation 4 entfällt. Das Ladekabel 30 gemäß des Gegenstandes kann mit einer Vielzahl verschiedener Fahrzeuge verwendet werden, ohne dass die Fahrzeuge für die Verbindung mit der Ladestation 4 nachgerüstet werden müssen.

## Patentansprüche

1. Ladekabelstecker für Elektrofahrzeuge mit
- einem Gehäuse (2),
- in dem Gehäuse (2) angeordneten, zum Anschluss an eine Ladestation (4) gebildeten elektrischen Kontakten (6), dadurch gehennzeichnet, dass der Ladehabelstecher
- einem in dem Gehäuse (2) angeordneten, mit der Ladestation (4) über die elektrischen Kontakte kommunizierenden Identifikationsmittel (8) beinhaltet.

2. Ladekabelstecker nach Anspruch 1, **dadurch gekennzeichnet, dass** das Identifikationsmittel (8) zur Übertragung eines Identifikationssignals über die Kontakte (6) an die Ladestation (4) gebildet ist.

3. Ladekabelstecker nach Anspruch 1 oder 2, **dadurch gekennzeichnet, dass** das Gehäuse (2) eine Aufnahme (10) für ein Verriegelungsmittel (12) der Ladestation (4) aufweist, derart, dass nach Aufnahme des Verriegelungsmittels (12) der Stecker an der Ladestation (4) formschlüssig befestigt ist.

4. Ladekabelstecker nach einem der vorangehenden Ansprüche, **dadurch gekennzeichnet, dass** das Gehäuse (2) ein zum Lesen einer Benutzeridentifikation eingerichtetes Lesemittel (14) aufweist, und dass das Lesemittel (14) in Wirkverbindung mit dem Identifikationsmittel (8) ist.

5. Ladekabelstecker nach Anspruch 4, **dadurch gekennzeichnet dass** das Lesemittel (14) zum berührungslosen eine Benutzeridentifikation aussendenden Schlüssels (16) gebildet ist.

6. Ladekabelstecker nach Anspruch 4 oder 5, **dadurch gekennzeichnet, dass** das Lesemittel (14) eine Transponderleseeinrichtung ist.

7. Ladekabelstecker nach einem der Ansprüche 4 bis 6, **dadurch gekennzeichnet, dass** das Lesemittel (14) zum Aussenden eines Signals an das Identifikationsmittel (8) bei einem Empfang der Benutzeridentifikation gebildet ist.

8. Ladekabelstecker nach einem der Ansprüche 4 bis 7, **dadurch gekennzeichnet, dass** das Identifikationsmittel (8) bei Empfang des Signals von dem Lesemittel (14) ein zumindest die Verriegelungsmittel (12) deaktivierendes Freigabesignal an die Ladestation (4) übermittelt.

9. Ladekabelstecker nach Anspruch 8, **dadurch gekennzeichnet, dass** das Freigabesignal die Energiezufuhr durch die Ladestation (4) unterbricht.

10. Ladekabelstecker nach einem der vorangehenden Ansprüche, **dadurch gekennzeichnet, dass** in dem Gehäuse (2) ein einen elektrischen Anschluss der Kontakte (6) an eine Ladestation (4) erkennendes Anschlusserkennungsmittel (18) angeordnet ist, wobei das Anschlusserkennungsmittel (18) die Identifikationsmittel (8) bei einem erkannten Anschluss an die Ladestation (4) aktiviert.

11. Ladekabel (20) mit einem Ladekabelstecker nach Anspruch 1.

12. System mit einem Ladekabel (20) nach Anspruch 11 und einer Ladestation (4).

13. System nach Anspruch 12, **dadurch gekennzeichnet, dass** ein eine Benutzeridentifikation aussendender Schlüssel (16) zur Kommunikation mit dem Lesemittel (14) vorgesehen ist.

14. System nach Anspruch 12 oder 13, **dadurch gekennzeichnet, dass** die Ladestation (4) Verriegelungsmitteln (12) zum Verriegeln des Steckers in der Ladestation (4) nach dem Empfang eines Identifikationssignals von dem Stecker aufweist.

15. System nach einem der Ansprüche 12 bis 14, **dadurch gekennzeichnet, dass** die Ladestation (4) Energiefreigabemittel (26)zur Freigabe einer Energiezufuhr an den Stecker bei einem Empfang eines Identifikationssignals von dem Stecker und/oder zum Unterbrechen der Energiezufuhr bei einem Empfang des Freigabesignals von dem Stecker aufweist.

## Claims

1. Charging cable plug for electric vehicles, with
- a housing (2),
- electrical contacts (6), arranged in the housing (2), for connection to a charging station (4),
**characterised in that** the charging cable plug comprises
- an identification means (8) arranged in the housing (2) and communicating with the charging station (4) via the electrical contacts.

2. Charging cable plug according to Claim 1, **characterised in that** the identification means (8) is formed such as to transfer an identification signal via the contacts (6) to the charging station (4).

3. Charging cable plug according to Claim 1 or 2, **characterised in that** the housing (2) has a receiver (10) for a locking means (12) of the charging station (4) such that after the locking means (12) has been received, the plug is secured by form fit to the charging station (4).

4. Charging cable plug according to one of the preceding claims, **characterised in that** the housing (2) has a reading means (14) configured to read a user identification, and **in that** the reading means (14) is in operational connection with the identification means (8).

5. Charging cable plug according to Claim 4, **characterised in that** the reading means (14) is formed for contact-free reading of a key (16) emitting a user identification.

6. Charging cable plug according to Claim 4 or 5, **characterised in that** the reading means (14) is a transponder reading device.

7. Charging cable plug according to one of Claims 4 to 6, **characterised in that** the reading means (14) is formed to emit a signal to the identification means (8) on receipt of the user identification.

8. Charging cable plug according to one of Claims 4 to 7, **characterised in that** the identification means (8), on receipt of the signal from the reading means (14), transmits a release signal to the charging station (4), at least deactivating the locking means (12).

9. Charging cable plug according to Claim 8, **characterised in that** the release signal interrupts the supply of energy through the charging station (4).

10. Charging cable plug according to one of the preceding claims, **characterised in that** arranged in the housing (2) is a connection identification means (18), which identifies an electrical connection of the contacts (6) to a charging station (4), wherein the connection identification means (18) activates the identification means (8) when a connection to the charging station (4) is identified.

11. Charging cable (20) with a charging cable plug according to Claim 1.

12. System with a charging cable (20) according to Claim 11 and a charging station (4).

13. System according to Claim 12, **characterised in that** a key (16) emitting a user identification is provided for communication with the reading means (14).

14. System according to Claim 12 or 13, **characterised in that** the charging station (4) has locking means (12) for locking the plug in the charging station (4) after the receipt of an identification signal from the plug.

15. System according to one of Claims 12 to 14, **characterised in that** the charging station (4) has energy release means (26) for releasing a supply of energy to the plug on receipt of an identification signal from the plug and/or for interrupting the supply of energy on receipt of the release signal from the plug.

## Revendications

1. Fiche de câble de charge pour véhicules électriques, avec
- un boîtier (2),
- des contacts électriques (6), qui, disposés dans le boîtier (2), sont conçus pour le raccordement à une station de charge (4),
**caractérisée en ce que** la fiche de câble de charge comprend
- un moyen d'identification (8), qui, logé dans le boîtier (2), communique avec la station de charge (4) par l'intermédiaire des contacts électriques.

2. Fiche de câble de charge selon la revendication 1, **caractérisée en ce que** le moyen d'identification (8) est conçu pour le transfert d'un signal d'identification à la station de charge (4), par l'intermédiaire des contacts électriques (6).

3. Fiche de câble de charge selon revendication 1 ou 2, **caractérisée en ce que** le boîtier (2) est doté d'un logement (10) pour un moyen de verrouillage (12) de la station de charge (4), de sorte que, après mise en place du moyen de verrouillage (12), la fiche est fixée par emboîtement à la station de charge (4).

4. Fiche de câble de charge selon l'une des revendications précédentes, **caractérisée en ce que** le boîtier (2) est doté d' un moyen de lecture (14), qui est aménagé pour la lecture d'une identification d'utilisateur, et que ledit moyen de lecture (14) est en liaison active avec le moyen d'identification (8).

5. Fiche de câble de charge selon la revendication 4, **caractérisée en ce que** le moyen de lecture (14) est conçu pour la lecture sans toucher d'une clé (16) émettant une identification d'utilisateur.

6. Fiche de câble de charge selon revendication 4 ou 5, **caractérisée en ce que le moyen de lecture (14)** est un dispositif de lecture transpondeur.

7. Fiche de câble de charge selon l'une des revendications 4 à 6, **caractérisée en ce que** le moyen de lecture (14) est conçu pour envoyer un signal au moyen d'identification (8), lors de la réception de l'identification d'utilisateur. "

8. Fiche de câble de charge selon l* une des revendications 4 à 7, **caractérisée en ce que** le moyen d'identification (8), lors de la réception du signal du moyen de lecture (14), transmet à la station de charge (4) un signal de libération, qui, au moins, désactive le moyen de verrouillage (12).

9. Fiche de câble de charge selon la revendication 8, **caractérisée en ce que le** signal de libération interrompt l'alimentation en énergie par la station de charge (4).

10. Fiche de câble de charge selon l'une des revendications précédentes, **caractérisée en ce que,** dans le boîtier (2), est logé un moyen de détection de raccordement (18), qui reconnait un raccordement électrique des contacts (6) à une station de charge (4), sachant que le moyen de détection de raccordement (18) active les moyens d'identification (8), lors de la détection d'un raccordement à la station de charge (4).

11. Câble de charge (20) avec une fiche de câble de charge selon la revendication 1.

12. Système doté d'un câble de charge (20) selon la revendication 11 et d'une station de charge (4).

13. Système selon la revendication 12, **caractérisé en ce qu**'une clé (16) émettant une identification d'utilisateur est prévue pour la communication avec le moyen de lecture (14).

14. Système selon revendication 12 ou 13, **caractérisé en ce que** la station de charge (4) est dotée de moyens de verrouillage (12) pour le verrouillage de la fiche dans la station de charge (4), après réception d'un signal d'identification de la fiche.

15. Système selon l'une des revendications 12 à 14, **caractérisé en ce que** la station de charge (4) est dotée de moyens de libération d'énergie (26) pour la libération d'une alimentation en énergie an den fiche, lors de la réception d'un signal d'identification de la fiche et / ou pour l'interruption de l'alimentation en énergie, lors de la réception du signal de libération de la fiche.
